(19) Europäisches Patentamt
European Patent Office
Office européen des brevets

(11) **EP 1 924 044 A1**

(12) **EUROPÄISCHE PATENTANMELDUNG**

(43) Veröffentlichungstag:
**21.05.2008 Patentblatt 2008/21**

(51) Int Cl.:
***H04L 27/26*** *(2006.01)*

(21) Anmeldenummer: 06023834.2

(22) Anmeldetag: **16.11.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK RS**

(71) Anmelder: **Nokia Siemens Networks GmbH & Co. KG**
**81541 München (DE)**

(72) Erfinder:
• **Hassler, Bernd, Dr.**
 **89171 Illerkirchberg (DE)**
• **Jelonnek, Björn, Dr.**
 **89079 Ulm (DE)**
• **Wolff, Gunter, Dr.**
 **89081 Ulm (DE)**

(54) **Vorrichtung und Verfahren zum Erzeugen eines Signals um das PAR in einem Mehrträgersystem zu reduzieren**

(57)  Die Erfindung betrifft eine Vorrichtung (400) zum Erzeugen eines Reduktionssignals für ein Signal mit einer Mehrzahl von Unterträgern, umfassend
- einen Begrenzer (402), dot ausgebildet ist, um aus dem Signal mit einer Mehrzahl von Unterträgern ein begrenztes Signal (S) zu erzeugen;
- einen Koeffizientenermittler (404), der ausgebildet ist, um aus den begrenzten Signal Koeffizienten ($C_k$) für ungenutzte Unterträger des Signals mit einer Mehrzahl von Unterträgern zu bestimmen; und
- einen Signalgenerator (406), der ausgebildet ist, um aus den Koeffizienten das Reduktionssignal ($X_n$) zu generieren, das mit den Signal kombiniert werden kann, um ein reduziertes Signal zu bilden.

 Der Koeffizientenermittler ist ausgebildet um die begrenzten Signale auf eine k-te Basis $e^{2\pi j \frac{(k-1)(n-1)}{N}}$ zu projektieren.

FIG 4

**Beschreibung**

Die Erfindung betrifft eine Vorrichtung zum Erzeugen eines Reduktionssignals für ein Signal mit einer Mehrzahl von Unterträgern gemäß Anspruch 1 und ein entsprechendes Verfahren gemäß Anspruch 14.

Bei OFDM- (Orthogonal Frequency Division Multiplexing) und OFDMA- (Orthogonal Frequency Division Multiple Access)basierten Mobilfunkstandards handelt es sich um Mehrfachträgersysteme. Durch die Kombination der Einzelträger entsteht ein Signal, dessen maximale Augenblicksleistung die mittlere Leistung deutlich übersteigt. Hinzu kommt, daß auch höherwertige Modulationsverfahren, wie beispielsweise QPSK (Quadrature Phase Shift Keying), 8PSK (Phase Shift Keying) oder 16QAM (Quadrature Amplitude Modulation) mit mehr als zwei möglichen Informationszuständen pro Sendesymbol verwendet werden können, um die verschiedenen verwendeten Träger zu modulieren. Bei diesen Modulationsverfahren wird im Einzelträger auf eine Konstanz der momentanen Sendeleistung zugunsten höherer Datenübertragungsraten verzichtet.

Je nach Modulationsverfahren und Kombination der Einzelträger kann daher bei den Mehrfachträgersystemen die maximale augenblickliche Leistung eines Sendesignals wesentlich über dem Mittelwert der Sendeleistung liegen. Das Verhältnis von maximaler zu mittlerer Sendeleistung wird als Peak to Average Ratio (PAR >1) oder Peak to Average Power Ratio (PAPR >1) bezeichnet. Ein Problem besteht nun darin, dass bei höherem PAR der Sendeverstärker eines Sendesystems beträchtliche Aussteuerreserven vorhalten muss, um nichtlineare Verzerrungen des Sendesignals beispielsweise aufgrund von Begrenzungs- bzw. Clipping-Effekten zu vermeiden. Dadurch werden die Komplexität und der Leistungsverbrauch des Verstärkers erhöht und der Wirkungsgrad des Gesamtsystems verringert.

Die DE10219318A1 befasst sich beispielsweise mit einem Verfahren zur Bildung eines trägerfrequenten Ausgangssignals aus mehreren Teilsignalen eines Basisfrequenzbands. Jedes Teilsignal wird in einem Hauptzweig amplitudenbegrenzt. Zudem werden für jedes Teilsignal in einem parallelen Nebenzweig Schätzwerte ermittelt, mit denen die Amplitudenbegrenzung im Hauptzweig gesteuert wird.

Die DE19838295A1 beschreibt ein Multiträgerübertragungsverfahren zum parallelen Übertragen von Informationen in Form eines Signals auf einer Mehrzahl von Subkanälen. Mittels einer Schwellwertentscheidung wird Subkanälen, die von einer Informationsübertragung ausgeschlossen sind, jeweils eine Korrekturfunktion derart aufgegeben, dass ein Verhältnis zwischen einem Spitzenwert des Signals und einem Effektivwert des Signals minimiert oder zumindest vermindert wird.

Die EP1248429A2 beschreibt ein DMT (Discrete Multitone)-Modulationsverfahren, mit dem sich das Verhältnis von maximaler zu mittlerer Sendeleistung eines zu sendenden Signals reduziert lässt. Dazu wird anfangs ein Versuchswert eines Begrenzungsverhütungssignals bestimmt und ermittelt, ob das Begrenzungsverhütungssignal zur Begrenzung des zu sendenden Signals geeignet ist. Ist dies nicht der Fall, so wird das Begrenzungsverhütungssignal solange verändert, bis es zur Begrenzung des zu sendenden Signals geeignet ist. Das letztendlich geeignete Begrenzungsverhütungssignal wird in ungenutzten Unterträgern des zu sendenden Signals übertragen, um die Leistungsspitzenwerte des zu sendenden Signals abzusenken. Zur Ermittlung des geeigneten Begrenzungsverhütungssignals wird eine Iterationsschleife verwendet. Dies kann jedoch zu unterschiedlichen Signalverzögerungen führen, da nicht von vornherein bekannt ist, wie oft die Iterationsschleife durchlaufen wird.

Eine Aufgabe der vorliegenden Erfindung ist es nun, eine Vorrichtung und ein Verfahren zum Erzeugen eines Reduktionssignals für ein Signal mit einer Mehrzahl von Unterträgern vorzuschlagen, wobei das Reduktionssignal zum Bilden eines reduzierten Signals aus dem Signal mit einer Mehrzahl von Unterträgern dienen kann.

Diese Aufgabe wird durch eine Vorrichtung zum Erzeugen eines Reduktionssignals für ein Signal mit einer Mehrzahl von Unterträgern gemäß Anspruch 1 und ein entsprechendes Verfahren gemäß Anspruch 14 gelöst. Weitere Ausgestaltungen der Erfindung ergeben sich aus den abhängigen Ansprüchen.

Ein wesentlicher Gedanke der Erfindung besteht darin, ein zu reduzierendes Signal mit einer Mehrzahl von Unterträgern zu begrenzen, insbesondere die Amplitude des Signals, aus dem begrenzten Signal Koeffizienten für ungenutzte Unterträger des Signals zu berechnen und mit Hilfe dieser Koeffizienten ein Reduktionssignal zu erzeugen, das mit dem ursprünglichen Signal, also dem zu reduzierenden Signal, kombiniert werden kann, um die Spitzenwerte und damit das PAR des zu reduzierenden Signals zu verringern. Dadurch kann insbesondere eine frequenzselektive Begrenzung eines Signals im Basisband erzielt werden, was im Vergleich zu herkömmlichen Begrenzungsmethoden wesentlich effizienter insbesondere für Multiträgersysteme wie OFDM- und OFDMA-Sendesysteme ist. Vor allem können mit der Erfindung Sendesignale im digitalen komplexen Basisband in der Amplitude begrenzt und die Maximalwerte der Sendeleistung stärker reduziert werden, als es mit den herkömmlichen eingangs erläuterten Verfahren möglich ist, insbesondere ohne störende Einbußen der Signalqualität.

Reduktion bzw. Begrenzung (engl. clipping) eines Signals im Sinne der vorliegenden Erfindung bedeutet, dass Spitzenwerte des Signals und somit das Verhältnis von maximaler zu mittlerer Sendeleistung des Signals reduziert werden. Das reduzierte Signal entspricht somit dem ursprünglichen Signal, kann jedoch in der Amplitude und in der Sendeleistung reduziert sein. Bei dem Signal kann es sich insbesondere um ein Sendesignal eines Mehrfachträgersystems handeln, in dem höherwertige Modulationsverfahren, wie beispielsweise QPSK, 8PSK oder 16QAM mit mehr als zwei möglichen Informationszuständen pro Sendesymbol verwendet werden. Es kann sich beispielsweise um ein Signal im komplexen Basisband eines Sendesystems handeln. Das Signal weist eine Mehrzahl von Unterträgern auf. Einige der Unterträger werden zur Informationsübertragung genutzt, während die übrigen Unterträger ungenutzt sind, das heißt, nicht zur Informationsübertragung verwendet werden.

Die vorliegende Erfindung ermöglicht eine Erzeugung eines Reduktionssignals durch eine Projektion eines geclippten Signals auf die ungenutzten Unterträger. Alternativ können auch andere Bildungsvorschriften eingesetzt werden, die eine stärkere Reduktion der Spitzenwerte zur Folge haben. Es ist nicht erforderlich, zur Bestimmung des Reduktionssignals eine Iterationsschleife zu verwenden, die solange ausgeführt wird, bis ein reduziertes Signal durch ein Beschneiden keine Veränderung mehr erfährt und damit einen beim Begrenzen vorgegebenen Schwellwert nicht mehr übersteigt. Stattdessen kann eine fest vorgegebene Anzahl von Reduktionsstufen mit konstanter Signalverzögerung verwendet werden. Gemäß der vorliegenden Erfindung ist in jeder Reduktionsstufe ein anderer Schwellwert zulässig. Auch können sich die Bildungsvorschriften für das Reduktionssignal bzw. die Koeffizienten von Reduktionsstufe zu Reduktionsstufe unterscheiden.

Die Erfindung betrifft nun gemäß einer Ausführungsform eine Vorrichtung zum Erzeugen eines Reduktionssignals für ein Signal mit einer Mehrzahl von Unterträgern, umfassend:

- einen Begrenzer, der ausgebildet ist, um aus dem Signal mit einer Mehrzahl von Unterträgern ein begrenztes Signal zu erzeugen;
- einen Koeffizientenermittler, der ausgebildet ist, um aus dem begrenzten Signal Koeffizienten für ungenutzte Unterträger des Signals mit einer Mehrzahl von Unterträgern zu bestimmen; und
- einen Signalgenerator, der ausgebildet ist, um aus den Koeffizienten das Reduktionssignal zu generieren, das mit dem Signal kombiniert werden kann, um ein reduziertes Signal zu bilden.

Gemäß einer Ausführungsform kann die Vorrichtung ferner einen Kombinierer aufweisen, der ausgebildet ist, um das Signal mit dem Reduktionssignal zu kombinieren, um das reduzierte Signal zu bilden. Der Kombinierer kann beispielsweise als Addierer ausgebildet sein.

Der Koeffizientenermittler kann ausgebildet sein, um die Koeffizienten mit Gewichtungsfaktoren zu gewichten. Mit Hilfe der Gewichtungsfaktoren kann die Genauigkeit der Reduktion eingestellt werden.

Bei dem Signal kann es sich um ein moduliertes Signal mit mehr als zwei möglichen Informationszuständen pro Symbol handeln. Ferner kann der Koeffizientenermittler ausgebildet sein, um die Koeffizienten durch eine symbolweise Projektion des begrenzten Signals zu bestimmen. Hierbei können der Koeffizientenermittler die Koeffizienten und der Signalgenerator das Reduktionssignal jeweils basierend auf vorbestimmten Algorithmen oder Formeln ermitteln. Insbesondere kann der Koeffizientenermittler gemäß einer Ausführungsform der Erfindung ausgebildet sein, um die Koeffizienten durch eine symbolweise Projektion des begrenzten Signals, umfassend N Abtastwerte für ein Symbol $S_n$; n = 1 ... N, auf die k-te Basisfunktion

$$e^{+2\pi j \cdot \frac{(k-1)\cdot(n-1)}{N}},$$

die dem k-ten ungenutzten Unterträger zugeordnet ist, zu bestimmen.

Gemäß einer weiteren Ausführungsform der Erfindung kann der Koeffizientenermittler ausgebildet sein, um einen Koeffizienten für den k-ten ungenutzten Unterträger gemäß der Formel:

$$C_k = \frac{1}{N} \cdot \sum_{n=1}^{N} s_n \cdot e^{-2\pi j \cdot \frac{(k-1)\cdot(n-1)}{N}}, \ 1 \leq k \leq N$$

zu berechnen.

Ferner kann gemäß einer Ausführungsform der Erfindung der Signalgenerator ausgebildet sein, um das Reduktionssignal gemäß der Formel:

$$X_n = \sum_{k=unused} C_k \cdot e^{+2\pi j \cdot \frac{(k-1)\cdot(n-1)}{N}}, n = 1 \ldots N$$

zu berechnen.

Gemäß einer Ausführungsform kann der Koeffizientenermittler ausgebildet sein, um die Koeffizienten aus dem begrenzten Signal und dem Signal zu bestimmen. Insbesondere kann der Koeffizientenermittler ausgebildet sein, um die Koeffizienten mittels einer Matrixoperation aus dem Signal und dem begrenzten Signal zu bestimmen.

Ferner kann der Begrenzer einen einstellbaren Begrenzungs-Schwellwert aufweisen, mit dem die Begrenzung des Signals einstellbar ist. Der Begrenzungs-Schwellwert definiert also, wie stark das Signal begrenzbar ist.

Die erfindungsgemäße Vorrichtung eignet sich vor allem zum Einsatz in OFDM- und OFDMA-basierten Kommunikationssystemen und kann eine wesentliche Verringerung des PAR und PAPR bewirken, wodurch die Anforderungen an Sendeverstärker hinsichtlich Komplexität und Leistungsverbrauch weniger hoch ausfallen als bei herkömmlichen Systemen mit hohem PAR und PAPR.

Eine weitere Ausführungsform der Erfindung betrifft ein System zum Erzeugen eines Zeitbereichsignals aus komplexen Eingangssymbolen, umfassend:

- einen Wandler, der ausgebildet ist, um die komplexen Eingangssymbole gemäß einer vorbestimmten Transformation in ein Signal mit einer Mehrzahl von Unterträgern zu transformieren; und
- eine Vorrichtung zum Erzeugen eines Reduktionssignals für ein Signal mit einer Mehrzahl von Unterträgern gemäß der Erfindung, der das Signal mit einer Mehrzahl von Unterträgern zum Bilden eines reduzierten Signals zugeführt wird, wobei das reduzierte Signal dem Zeitbereichsignal entspricht.

  Das System kann ferner eine weitere erfindungsgemäße Vorrichtung zum Erzeugen eines Reduktionssignals aufweisen, wobei die Vorrichtungen in Reihe geschaltet sind. Durch eine Kaskadierung mehrerer PAPR-Reduktionsblöcke, in Form der erfindungsgemäßen Vorrichtungen, kann eine weitere Verbesserung des PAPR erreicht werden.

Bei der vorbestimmten Transformation kann es sich um eine inverse Fouriertransformation bzw. um eine inverse schnelle Fouriertransformation IFFT (Inverse Fast Fourier Transformation) handeln. Bei dem System kann es sich um ein OFDM- oder OFDMA-basiertes Sendesystem handeln.

Eine weitere Ausführungsform der Erfindung betrifft ein Verfahren zum Erzeugen eines Reduktionssignals für ein Signal mit einer Mehrzahl von Unterträgern, das folgende Schritte umfasst:

- Erzeugen eines begrenzten Signals aus dem Signal mit einer Mehrzahl von Unterträgern;
- Bestimmen von Koeffizienten für ungenutzte Unterträger des Signals mit einer Mehrzahl von Unterträgern aus dem begrenzten Signal; und
- Generieren eines Reduktionssignals aus den Koeffizienten, das mit dem Signal mit einer Mehrzahl von Unterträgern kombiniert werden kann, um ein reduziertes Signal zu erhalten.

Der erfindungsgemäße Ansatz ermöglicht auf besonders vorteilhafte Weise und ohne störende Einbußen der Signalqualität, Sendesignale im digitalen komplexen Basisband in der Amplitude zu begrenzen, und die Maximalwerte der Sendeleistung stärker zu reduzieren, als dies mit herkömmlichen Verfahren möglich ist.

Das erfindungsgemäße Verfahren bietet zudem den Vorteil, dass keine zusätzlichen FFT- und IFFT-Transformationen erforderlich sind.

Durch die Ausnutzung eines größeren Spielraumes für Signalabweichungen ist es möglich, bei gleichem Fehler-Vektor-Betrag EVM (Error-Vector Magnitude) eine Verringerung des PAR erzielt. Dieser Spielraum vergrößert sich vor allem bei Mobilfunksystemen mit höherwertigen Modulationsverfahren.

Der erfindungsgemäße Ansatz ermöglicht den Einsatz leistungsarmer und damit kostengünstiger Verstärker, um eine vorgegebene mittlere Ausgangsleistung ohne störende Einbußen der Signalqualität zu erzielen.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in:

Fig. 1 ein Blockschaltbild eines UMTS-Sendesystems;
Fig. 2 ein Blockschaltbild eines weiteren OFDM-basierten Sendesystems;

Fig. 3 ein Blockschaltbild eines weiteren Sendesystems;

Fig. 4 ein Blockschaltbild eines Systems mit einer Vorrichtung gemäß einem Ausführungsbeispiel der Erfindung;

Fig. 5 ein Blockschaltbild eines Systems mit einer Vorrichtung gemäß einem weiteren Ausführungsbeispiel der Erfindung; und

Fig. 6 ein Blockschaltbild eines Systems gemäß einem weiteren Ausführungsbeispiel der Erfindung.

Im Folgenden können gleiche und/oder funktional gleiche Elemente mit dem gleichen Bezugszeichen versehen sein.

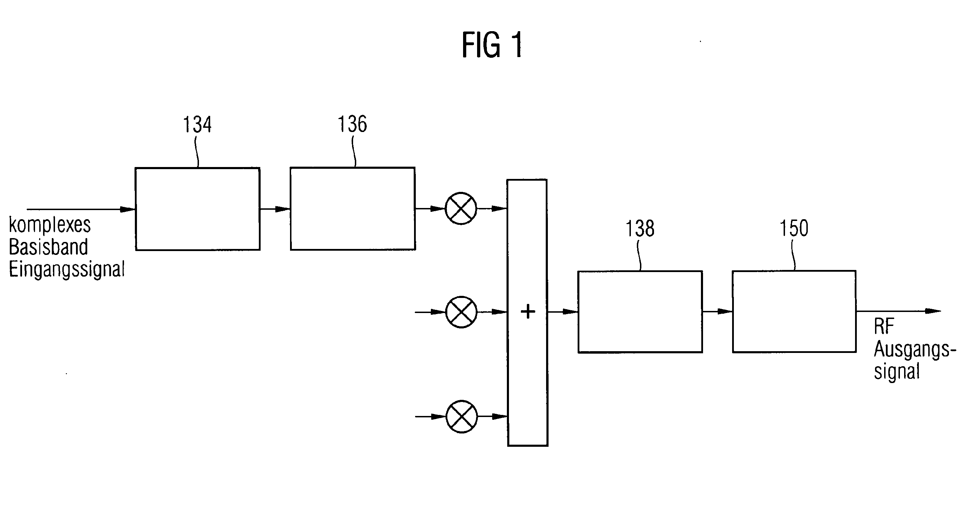

Fig. 1 stellt, stark vereinfacht, ein Sendesystem anhand des Beispiels UMTS (Universal Mobile Telecommunications System) dar. Insbesondere ist auch eine vereinfachte Darstellung einer Erzeugung eines Sendesignals gezeigt.

Ein zu sendendes Signal liegt hierbei im komplexen Basisband als Eingangssignal vor. Ein Basisbandbegrenzer (Baseband Clipping) 134 schränkt die maximale Leistung des zu sendenden Signals ein. In einem anschließenden Block 136 wird die Bandbreite des Signals durch einen RRC (Root Raised Cosine)-Filter begrenzt sowie durch weitere Interpolationsfilter auf eine höhere Abtastrate einer digitalen Zwischenfrequenz IF (Intermediate Frequency) gebracht.

Durch einen Mischer erfährt das Signal einen Frequenzversatz. Auf der Zwischenfrequenz können mehrere komplexe Basisbandsignale überlagert werden, wie in Fig. 1 durch mehrere digitale Frequenzkonverter angedeutet wird. Das Signal erfährt in einem weiteren Block 138 eine weitere Interpolation bzw. eine weitere Begrenzung in der Zwischenfrequenz und in einem weiteren Block 150 eventuell noch eine weitere Interpolation, Digital/Analog-Umsetzung und Modulation auf die eigentliche Hochfrequenzlage RF (Radio Frequency). Damit sind in Fig. 1 zwei verschiedene Platzierungsmöglichkeiten der Begrenzung des Sendesignals dargestellt. Sie unterscheiden sich wesentlich in ihrer Art der Verzerrung des RF Ausgangssignals.

Während der Basisbandbegrenzer 134 das Nutzsignal im Band stark verzerren kann und somit zu einer Erhöhung des EVM führt, beeinflusst es aufgrund der nachfolgenden RRC-Filter die Nachbarbänder nur unwesentlich. Das RRC-Filter bildet jedoch Linearkombinationen des begrenzten Nutzsignals und erhöht damit die maximal auftretende Signalamplitude. Im Gegensatz dazu garantiert die Zwischenfrequenz-Begrenzung 138 die maximale Signalamplitude, erzeugt jedoch starke Störungen in den Nachbarbändern, auch ACLR (Adjacent Channel Leakage Ratio) genannt.

Zur Signalbegrenzung in OFDM-basierten Systemen können das rechteckige Begrenzen sowie das zirkulare Begrenzen verwendet werden. Bei dem rechteckigen Begrenzen werden die Inphase-und Quadraturkomponente des komplexen Signals unabhängig voneinander begrenzt. Bei dem zirkularen Begrenzen überschreitet der Betrag des komplexen Basisbandsignals einen Maximalwert nicht.

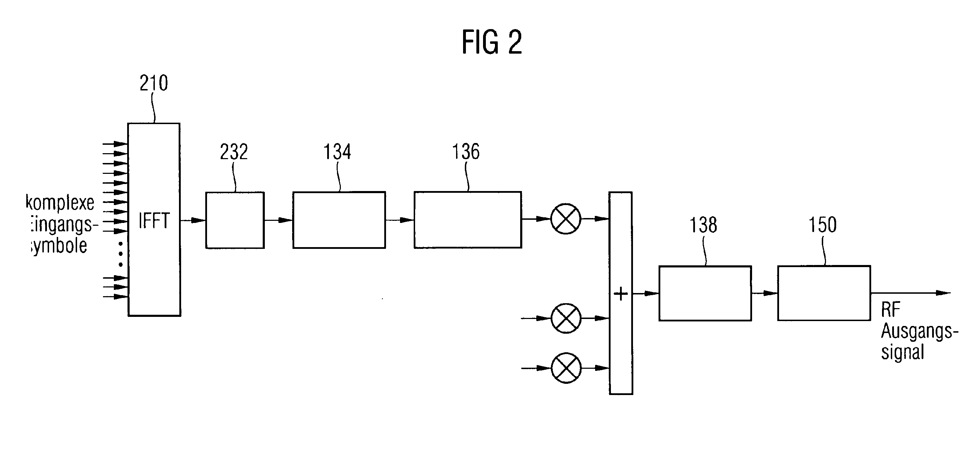

Fig. 2 zeigt eine vereinfachte Darstellung der Erzeugung des Sendesignals in OFDM-basierten Systemen. In OFDM-basierten Systemen werden die anhand von Fig. 1 beschriebenen Begrenzungsalgorithmen in gleicher Weise eingesetzt. Jedoch stammt das komplexe IQ-Basisbandsignal, das von dem Basisbandbegrenzer 134 empfangen wird, aus IFFT- 210 transformierten komplexen Eingangssymbolen. Außerdem wird in vielen Übertragungsverfahren in einem Block 232 ein zeitliches Schutzintervall zwischen den Symbolen eingefügt.

Ein Nachteil des Basisbandbegrenzens, nämlich die Erhöhung der maximalen Signalamplitude durch das nachfolgende RRC-Filter und die weitere Interpolation, kann durch eine Vorabberechnung der zu erwartenden Signalüberhöhung und einer entsprechenden Begrenzung des Basisbandsignals vermieden werden. Damit wird bei gleichem EVM eine Verringerung des PAR erzielt.

Der Fehler wird statistisch gesehen gleichmäßig über das gesamte Basisband verteilt und durch die nachfolgenden Sendefilter spektral geformt. Insbesondere bei höherwertigeren Modulationsverfahren ist die Fehlertoleranz im Basisband geringer und die Wirksamkeit dieser Methode lässt nach, weil damit der Spielraum für Signalabweichungen eingeengt wird, die eine Absenkung der maximalen Momentanleistung bewirken sollen.

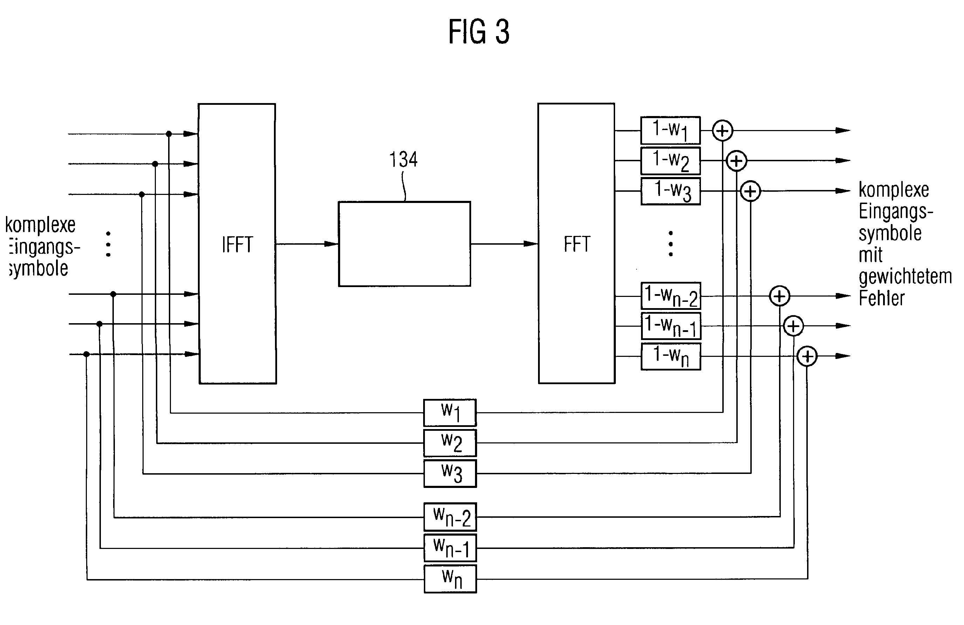

Im Frequenzband des Nutzsignals gibt es jedoch Bereiche, die größere Signalabweichungen tolerieren. Diese sind dadurch charakterisiert, dass sie am Rande des Basisbandes liegen, wo das Signal aufgrund des Empfangsfilters im zugehörigen Empfänger stärker bedämpft wird, bzw. im ungenutzten Frequenzspektrum des Nutzsignals liegen und nicht mit Information belegt sind. Diese Tatsache wird bei dem in Fig. 3 dargestellten System genutzt. Dadurch kann bei gleichem EVM eine stärkere Verringerung des PAR erzielt werden.

Fig. 3 zeigt eine vereinfachte Darstellung des Prinzips des interpolierenden Begrenzens, also der Erzeugung eines begrenzten Sendesignals mit unterträgerspezifischer Fehlerwichtung.

Zunächst wird aus den Eingangssymbolen mittels IFFT ein Zeitsignal erzeugt. Dieses wird einer Basisbandbegrenzung 134 unterzogen. Das so modifizierte Zeitsignal wird mit einer FFT wieder zurücktransformiert. Durch das Clipping wurden die ursprünglichen Symbole verfälscht.

Das Ausgangssignal setzt sich aus dem Eingangssignal, multipliziert mit wk, und dem fehlerbehafteten Signal, multipliziert mit (1-wk) zusammen. Mit Hilfe der festen Wichtungsfaktoren w1 ... wn ($0 \leq wk \leq 1$; k = 1 ... n) kann für jeden Unterträger k die Genauigkeit individuell eingestellt werden. Dabei bedeutet wk = 1 höchste Genauigkeit, also keinen Fehler und wk = 0 maximale Fehlertoleranz. Dazwischen liegen Werte, mit denen die Fehlertoleranz eingeschränkt werden kann.

Ausgangsseitig ist eine komplette FFT erforderlich, um die Unterträgersymbole zu erhalten. Außerdem wird noch eine weitere IFFT benötigt, um das Sendesignal zu erzeugen.

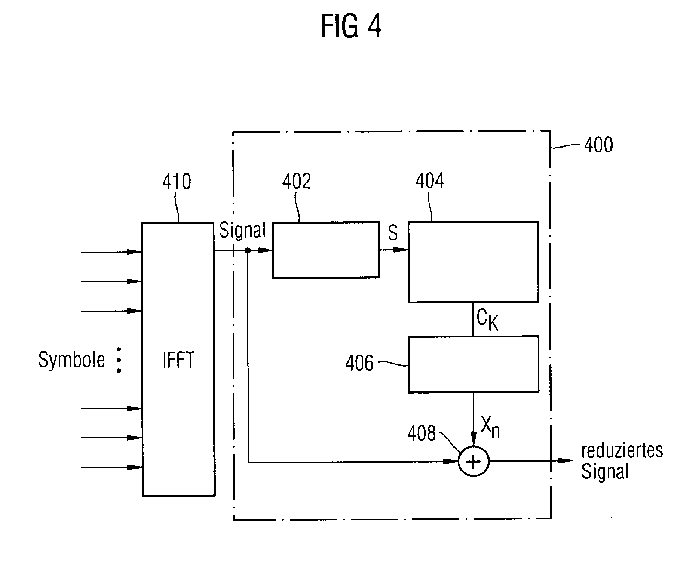

Fig. 4 zeigt ein System mit einer Vorrichtung 400 zur Reduktion eines Signals mit einer Mehrzahl von Unterträgern. Die Vorrichtung 400 ist ausgebildet, um das zu reduzierende Signal zu empfangen und ein reduziertes Signal auszugeben. Im Vergleich zu dem zu reduzierenden Signal kann das reduzierte Signal in der Amplitude begrenzt sein. Vorzugsweise sind in dem reduzierten Signal Spitzenwerte des zu reduzierenden Signals reduziert. Die Vorrichtung 400 weist einen Begrenzer 402, einen Koeffizientenermittler 404 und einen Signalgenerator 406 auf. Zusätzlich kann die Vorrichtung 400 einen Kombinierer 408 aufweisen.

Der Begrenzer 402 ist ausgebildet, um das zu reduzierende Signal mit einer Mehrzahl von Unterträgern zu empfangen, aus dem empfangenen Signal ein begrenztes Signal (S), ein sog. geclipptes Signal, zu erzeugen und an den Koeffizientenermittler 404 bereitzustellen. Bei dem Begrenzer 402 kann es sich um einen bekannten Begrenzer-Block (engl. clipping block) handeln, der ausgebildet ist, um die maximale Leistung des Signals einzuschränken.

Der Koeffizientenermittler 404 ist ausgebildet, um das begrenzte Signal S zu empfangen und aus dem begrenzten Signal Koeffizienten $C_K$ für ungenutzte Unterträger des Signals zu bestimmen. Gemäß diesem Ausführungsbeispiel wird für jeden ungenutzten Unterträger des Signals ein eigener Koeffizient $C_K$ ermittelt. Für genutzte Unterträger wird kein Koeffizient ermittelt. Alternativ können nur für ausgewählte ungenutzte Unterträger Koeffizienten ermittelt werden. Der Koeffizientenermittler 404 ist ferner ausgebildet, um die Koeffizienten $C_K$ an den Signalgenerator 406 bereitzustellen.

Der Signalgenerator 406 ist ausgebildet, um die Koeffizienten $C_K$ zu empfangen und aus den empfangenen Koeffizienten ein Reduktionssignal $X_n$ zu generieren und bereitzustellen.

Durch Kombination des Reduktionssignals $X_n$ und des zu reduzierenden Signals kann das Signal mit einer Mehrzahl an Unterträgern reduziert, d.h. begrenzt werden. Insbesondere lässt sich eine Reduktion der Spitzenwerte des Signals erreichen. Gemäß diesem Ausführungsbeispiel weist die Vorrichtung 400 einen Kombinierer 408 in Form einer Additionsschaltung auf, die ausgebildet ist, um das Reduktionssignal $X_n$ zum Signal zu addieren und auf diese Weise aus dem Signal ein reduziertes Signal zu erzeugen, das von der Vorrichtung 400 bereitgestellt bzw. ausgegeben werden kann.

Die Vorrichtung 400 ist Teil eines Systems, das ausgebildet ist, um komplexe Eingangssymbole zu empfangen und ein Zeitbereichssignal auszugeben. Dazu weist das System einen Wandler 410 auf, der ausgebildet ist, um die komplexen Eingangssymbole zu empfangen und aus den Eingangssymbolen mittels einer geeigneten Transformation das Zeitbereichssignal zu erzeugen. Der Wandler 410 ist ferner ausgebildet, um das Zeitbereichssignal als Signal an die Vorrichtung 400 bereitzustellen.

Bei dem System handelt es sich um ein Sendesystem gemäß einem OFDM- oder OFDMA- basierten Mobilfunkstandard. Der Wandler 410 ist ausgebildet, um eine inverse schnelle Fouriertransformation IFFT durchzuführen. Dies bedeutet, dass es sich bei dem zu reduzierenden Signal um ein komplexes IQ-Basisbandsignal handeln kann, dass aus IFFT- transformierten komplexen Symbolen ermittelt wird. Zwischen den Symbolen kann jeweils ein zeitliches Schutzintervall (nicht gezeigt in Fig. 4) eingefügt sein. Der Begrenzer 402 ist ausgebildet, um eine Basisbandbegrenzung durchzuführen.

Die Berechnung eines jeden der Koeffizienten $C_k$ erfolgt durch eine symbolweise Projektion des begrenzten Signals S, umfassend N Abtastwerte für ein Symbol $s_n$; n = 1 ... N, auf die k-te Basisfunktion $e^{+2\pi j \cdot \frac{(k-1)\cdot(n-1)}{N}}$, die dem jeweiligen, ungenutzten Unterträger zugeordnet ist. Es werden also nur diejenigen k verwendet, deren Basisfunktionen ungenutzten Unterträgern zugeordnet sind. Hierbei wird die Tatsache ausgenutzt, dass die Basisfunktionen aller Unterträger zueinander orthogonal sind. Die Berechnung der Koeffizienten $C_k$ erfolgt gemäß der Formel:

$$C_k = \frac{1}{N} \cdot \sum_{n=1}^{N} s_n \cdot e^{-2\pi j \cdot \frac{(k-1)\cdot(n-1)}{N}}, \quad 1 \leq k \leq N$$

Der Signalgenerator 406 ist ausgebildet, um aus diesen Koeffizienten $C_k$ das Reduktionssignal $X_n$

$$X_n = \sum_{k=unused} C_k \cdot e^{+2\pi j \cdot \frac{(k-1)\cdot(n-1)}{N}}, \quad n = 1 \ldots N$$

zu erzeugen.

Ein Schwellwert kann im Begrenzer 402 variiert werden, um eine optimale Reduktion zu erreichen. Ferner können die Koeffizienten mit entsprechenden Gewichtungsfaktoren versehen werden. Abhängig von den Gegebenheiten können sowohl der Schwellwert als auch die Gewichtungsfaktoren fest einstellbar oder variabel sein, um beispielsweise während des Betriebs angepasst zu werden.

Alternativ können die Koeffizienten $C_K$ auch unter Verwendung anderer Formeln, Algorithmen oder anderen Verfahren, beispielsweise Matrixoperationen berechnet oder ermittelt werden.

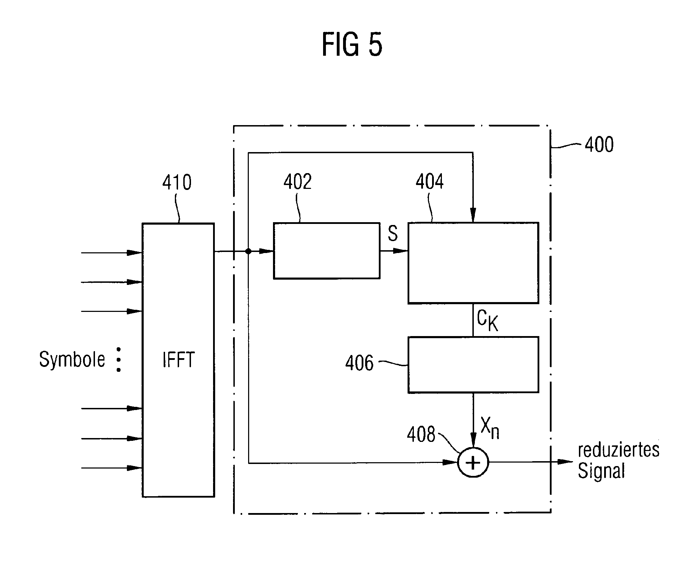

Fig. 5 zeigt ein weiteres Ausführungsbeispiel des in Fig.1 gezeigten Systems. Gemäß diesem Ausführungsbeispiel ist der Koeffizientenermittler 404 ausgebildet, um sowohl das begrenzte Signal S als auch das zu begrenzende Signal zu empfangen. Somit fließt bei der Ermittlung der Koeffizienten $C_K$ auch das unbegrenzte Signal ein. Die Reduktion der Spitzenwerte des Signals erfolgt somit unter zusätzlicher Berücksichtigung des unbegrenzten Signals.

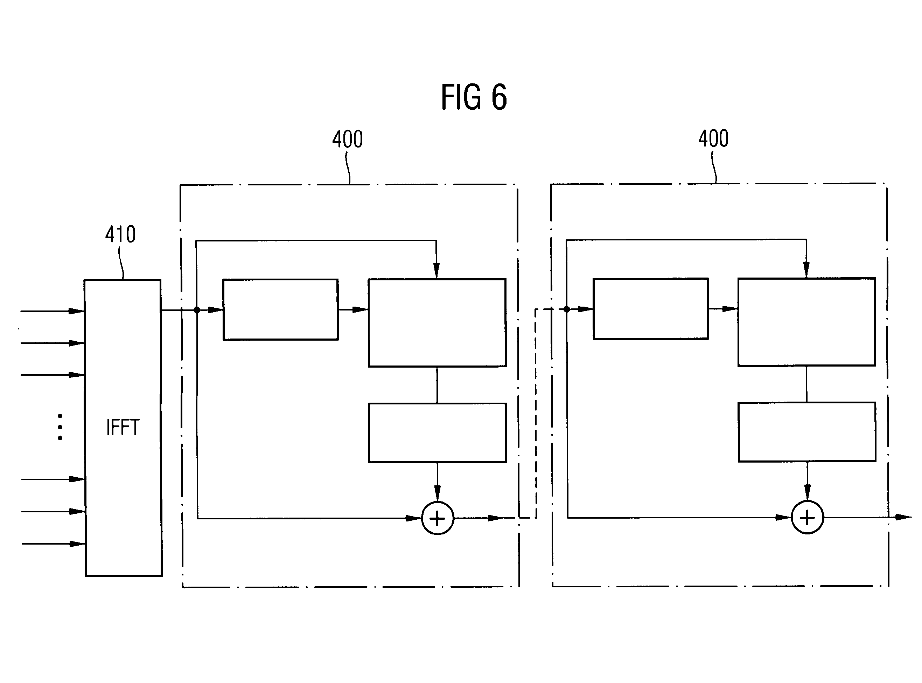

Fig. 6 zeigt ein weiteres Ausführungsbeispiel des Systems gemäß der vorliegenden Erfindung. Gemäß diesem Ausführungsbeispiel ist das System ausgebildet, um aus den komplexen Eingangssymbolen ein Zeitbereichssignal, das in zwei oder mehr Stufen reduziert wurde, zu erzeugen und auszugeben. Das System weist einen Wandler 410 und zwei oder mehr Vorrichtungen 400 auf, die in Reihe geschaltet sind.

Der Wandler 410 ist ausgebildet, um über die komplexen Eingangssymbole eine IFFT auszuführen, um das Signal zu erzeugen und an eine erste Vorrichtung 400 bereitzustellen. Die erste Vorrichtung 400, bei der es sich um eine beliebige der zuvor beschriebenen Vorrichtungen 400 handeln kann, ist ausgebildet, um das Signal zu empfangen und als reduziertes Signal an die zweite Vorrichtung 400 bereitzustellen.

Bei der zweiten Vorrichtung 400 kann es sich wiederum um eine beliebige der zuvor beschriebenen Vorrichtungen 400 handeln. Das bedeutet, dass die kaskadierten Vorrichtungen 400 identisch oder unterschiedlich ausgebildet sein können. Die zweite Vorrichtung 400 ist ausgebildet, um das reduzierte Signal von der ersten Vorrichtung 400 zu empfangen und erneut zu reduzieren.

In jeder Vorrichtung 400, die jeweils einem PAPR-Reduktionsblock entspricht, kann ein Begrenzungsschwellwert und eine Gewichtung der Koeffizienten individuell gewählt werden. Eine Anzahl der kaskadierten Vorrichtungen 400 ist nicht begrenzt und kann situationsabhängig gewählt werden.

Die vorliegende Erfindung wurde an Hand von Mobilfunk-Sendesystemen beschrieben, ist jedoch nicht auf solche Systeme begrenzt. Vielmehr kann der erfindungsgemäße Ansatz für alle System eingesetzt werden, in denen eine Begrenzung eines Signals erwünscht ist.

Bezugszeichen

| | |
|---|---|
| 134 | Basisband Begrenzung |
| 136 | Interpolierung |
| 138 | Zwischenfrequenz Begrenzung |
| 150 | Modulation |
| 210 | Transformation |
| 232 | Schutzintervall Einfüger |
| 400 | Vorrichtung |
| 402 | Begrenzer |
| 404 | Koeffizientenermittler |
| 406 | Signalgenerator |
| 408 | Kombinierer |
| 410 | Wandler |

**Patentansprüche**

1. Vorrichtung (400) zum Erzeugen eines Reduktionssignals für ein Signal mit einer Mehrzahl von Unterträgern, umfassend

- einen Begrenzer (402), der ausgebildet ist, um aus dem Signal mit einer Mehrzahl von Unterträgern ein begrenztes Signal (S) zu erzeugen;
- einen Koeffizientenermittler (404), der ausgebildet ist, um aus dem begrenzten Signal Koeffizienten ($C_K$) für ungenutzte Unterträger des Signals mit einer Mehrzahl von Unterträgern zu bestimmen; und
- einen Signalgenerator (406), der ausgebildet ist, um aus den Koeffizienten das Reduktionssignal ($X_n$) zu generieren, das mit dem Signal kombiniert werden kann, um ein reduziertes Signal zu bilden.

2. Vorrichtung gemäß Anspruch 1,

**dadurch gekennzeichnet , dass**
die Vorrichtung ferner einen Kombinierer (408) aufweist, der ausgebildet ist, um das Signal mit dem Reduktionssignal $(X_n)$ zu kombinieren, um das reduzierte Signal zu bilden.

3. Vorrichtung gemäß einem der vorangegangenen Ansprüche,
**dadurch gekennzeichnet , dass**
der Koeffizientenermittler (404) ausgebildet ist, um die Koeffizienten $(C_K)$ unter Einbeziehung von Gewichtungsfaktoren zu bestimmen.

4. Vorrichtung gemäß einem der vorangegangenen Ansprüche,
**dadurch gekennzeichnet , dass**
es sich bei dem Signal um ein moduliertes Signal mit mehr als zwei möglichen Informationszuständen pro Symbol handelt und wobei der Koeffizientenermittler (404) ausgebildet ist, um die Koeffizienten $(C_K)$ durch eine symbolweise Projektion des begrenzten Signals (S), umfassend N Abtastwerte für ein Symbol $s_n$; n = 1 ... N, auf die k-te Basisfunktion

$$e^{+2\pi j \cdot \frac{(k-1)\cdot(n-1)}{N}},$$

die dem k-ten ungenutzten Unterträger zugeordnet ist, zu bestimmen.

5. Vorrichtung gemäß Anspruch 4,
**dadurch gekennzeichnet , dass**
der Koeffizientenermittler (404) ausgebildet ist, um einen Koeffizienten $(C_K)$ für den k-ten ungenutzten Unterträger gemäß der Formel

$$C_k = \frac{1}{N} \cdot \sum_{n=1}^{N} s_n \cdot e^{-2\pi j \cdot \frac{(k-1)\cdot(n-1)}{N}}, \ 1 \leq k \leq N$$

zu berechnen.

6. Vorrichtung gemäß Anspruch 5,
**dadurch gekennzeichnet , dass**
der Signalgenerator (406) ausgebildet ist, um das Reduktionssignal $(X_n)$ gemäß der Formel

$$X_n = \sum_{k=unused} C_k \cdot e^{+2\pi j \cdot \frac{(k-1)\cdot(n-1)}{N}}, \ n = 1 \dots N$$

zu berechnen.

7. Vorrichtung gemäß einem der vorangegangenen Ansprüche,
**dadurch gekennzeichnet , dass**
der Koeffizientenermittler (404) ausgebildet ist, um die Koeffizienten $(C_K)$ aus dem begrenzten Signal (S) und dem Signal zu bestimmen.

8. Vorrichtung gemäß Anspruch 7,
**dadurch gekennzeichnet , dass**
der Koeffizientenermittler (404) ausgebildet ist, um die Koeffizienten mittels einer Matrixoperation aus dem Signal und dem begrenzten Signal (S) zu bestimmen.

**9.** Vorrichtung gemäß einem der vorangegangenen Ansprüche,
**dadurch gekennzeichnet , dass**
der Begrenzer (402) einen einstellbaren Begrenzungs-Schwellwert aufweist, der definiert, wie stark das Signal begrenzbar ist.

**10.** System zum Erzeugen eines Zeitbereichsignals aus komplexen Eingangssymbolen, umfassend

- einen Wandler (410) der ausgebildet ist, um die komplexen Eingangssymbole gemäß einer vorbestimmten Transformation in ein Signal mit einer Mehrzahl von Unterträgern zu transformieren; und
- eine Vorrichtung (400) zum Erzeugen eines Reduktionssignals für ein Signal mit einer Mehrzahl von Unterträgern gemäß einem der Ansprüche 1 bis 9, der das Signal mit einer Mehrzahl von Unterträgern zum Bilden eines reduzierten Signals zugeführt wird, wobei das reduzierte Signal dem Zeitbereichsignal entspricht.

**11.** System gemäß Anspruch 10,
**dadurch gekennzeichnet , dass**
das System ferner eine weitere Vorrichtung (400) gemäß einem der Ansprüche 1 bis 8 aufweist, wobei die Vorrichtung und die weitere Vorrichtung in Reihe geschaltet sind.

**12.** System gemäß einem Ansprüche 10 oder 11,
**dadurch gekennzeichnet , dass**
es sich bei der vorbestimmten Transformation um eine inverse Fouriertransformation handelt.

**13.** System gemäß einem der Ansprüche 10 bis 12,
**dadurch gekennzeichnet , dass**
es sich um ein OFDM- oder OFDMA-basiertes Sendesystem handelt.

**14.** Verfahren zum Erzeugen eines Reduktionssignals für ein Signal mit einer Mehrzahl von Unterträgern, das folgende Schritte umfasst:

- Erzeugen eines begrenzten Signals (S) aus dem Signal mit einer Mehrzahl von Unterträgern;
- Bestimmen von Koeffizienten ($C_K$) für ungenutzte Unterträger des Signals mit einer Mehrzahl von Unterträgern aus dem begrenzten Signal; und
- Generieren eines Reduktionssignals ($X_n$) aus den Koeffizienten, das mit dem Signal mit einer Mehrzahl von Unterträgern kombiniert werden kann, um ein reduziertes Signal zu erhalten.

FIG 1

EP 1 924 044 A1

# FIG 2

# FIG 3

komplexe
Eingangssymbole

IFFT

134

FFT

1-w_1
1-w_2
1-w_3

komplexe
Eingangssymbole
mit
gewichtetem
Fehler

1-w_{n-2}
1-w_{n-1}
1-w_n

w_1
w_2
w_3

w_{n-2}
w_{n-1}
w_n

EP 1 924 044 A1

# FIG 4

# FIG 5

FIG 6

**Europäisches Patentamt**

## EUROPÄISCHER RECHERCHENBERICHT

Nummer der Anmeldung

EP 06 02 3834

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GATHERER A ET AL: "Controlling clipping probability in DMT transmission" SIGNALS, SYSTEMS & COMPUTERS, 1997. CONFERENCE RECORD OF THE THIRTY-FIRST ASILOMAR CONFERENCE ON PACIFIC GROVE, CA, USA 2-5 NOV. 1997, LOS ALAMITOS, CA, USA,IEEE COMPUT. SOC, US, Bd. 1, 2. November 1997 (1997-11-02), Seiten 578-584, XP010280889 ISBN: 0-8186-8316-3 * Seite 580, linke Spalte, Zeile 13 - Zeile 17 * * Seite 580, rechte Spalte, letzter Absatz - Seite 581, linke Spalte, Zeile 3 * ----- | 1-3,7-14 | INV. H04L27/26 |

**RECHERCHIERTE SACHGEBIETE (IPC)**

H04L

Der vorliegende Recherchenbericht wurde für alle Patentansprüche erstellt

| Recherchenort | Abschlußdatum der Recherche | Prüfer |
|---|---|---|
| Berlin | 5. April 2007 | Farese, Luca |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10219318 A1
- DE 19838295 A1

- EP 1248429 A2